# EUROPÄISCHE PATENTSCHRIFT

(11) **EP 1 179 555 B1**
(45) Veröffentlichungstag und Bekanntmachung des Hinweises auf die Patenterteilung: **27.04.2005**
(21) Anmeldenummer: 01115899.5
(22) Anmeldetag: 29.06.2001
(51) Int. Cl.: C08G 18/81

(54) **Monomerarme 1:1 Monoaddukte aus Hydroxy(meth)acrylaten und Diisocyanaten und Verfahren zu ihrer Herstellung**
1:1 Monoadducts from hydroxy(meth)acrylates and diisocyanates having low monomer content and process for their preparation
Produits de monoaddition en rapport 1:1 de (meth)acrylates et de diisocyanates à faible teneur en monomères et leurs procédés de préparation

(30) Priorität: 08.08.2000 DE 10038617
(43) Veröffentlichungstag der Anmeldung: 13.02.2002
(73) Patentinhaber: Degussa AG, 40474 Düsseldorf (DE)
(72) Erfinder: Kohlstruk, Stephan, Dr., 48249 Dülmen (DE); Hayen, Lothar, 44628 Herne (DE); Spyrou, Emmanouil, Dr., 45772 Marl (DE)

(56) Entgegenhaltungen:
- DE-A- 19 800 528
- US-A- 4 572 610
- PATENT ABSTRACTS OF JAPAN vol. 013, no. 302 (C-616), 12. Juli 1989 (1989-07-12) & JP 01 092276 A (DAINIPPON INK & CHEM INC), 11. April 1989 (1989-04-11)

## Beschreibung

Die Erfindung betrifft monomerarme 1 : 1 Monoaddukte aus Hydroxy(meth)-acrylaten und Diisocyanaten und ein Verfahren zu ihrer Herstellung, mit einem Gehalt an freiem Diisocyanat von unter 0,7 Gew.-%. Bei derartigen Addukten handelt es sich um urethangruppenhaltige difunktionelle Monomere mit reaktiver Isocyanat-Funktion und polymerisierbarer Doppelbindung. Beide funktionelle Gruppen können unabhängig voneinander chemische Reaktionen eingehen. Die jeweils andere Funktion bleibt unangetastet und steht für weitere Umsetzungen zur Verfügung.

Die Monoaddukte aus Hydroxy(meth)acrylaten und Diisocyanaten sind aufgrund dieser ihnen innewohnenden Heterofunktionalität wertvolle, vielseitig einsetzbare Synthesebausteine. Anwendungsfelder liegen z. B. im Bereich der Darstellung urethangruppenhaltiger, acrylfunktionalisierter Derivate durch Reaktion der Isocyanatgruppe mit monofunktionellen Reagenzien oder der Herstellung entsprechender acrylfunktionalisierter, UV-härtbarer Harze durch Umsetzung der Isocyanatgruppe mit polyfunktionellen Reaktionspartnern. Möglich ist auch die Darstellung von Polyisocyanaten durch z. B. radikalisch initiierte Homo- oder Coolymerisation der (Meth)Acrylgruppe. Die Reaktionsfreudigkeit der NCO-Gruppen solcher Polymerisate ermöglicht leicht und unter milden Bedingungen den Zugang zu maßgeschneiderten Polymeren mit einzigartigem Eigenschaftsprofil.

Konkret beschreibt die Patentliteratur den Einsatz von olefinisch ungesättigten Urethanen mit Isocyanatfunktion beispielsweise zur Herstellung von Vernetzern (DE 35 01 493, US 4 861 853) und selbstvernetzenden Systemen (US 4 861 853), auch auf Wasserbasis (EP 0519 513).

Addukte aus Diisocyanaten und Hydroxy(meth)acrylaten werden klassisch durch Umsetzung der Edukte im Molverhältnis 1:2 erhalten. Bei diesem Verfahren entsteht als Produkt zwangsläufig eine Mischung aus heterofunktionellem Monoaddukt, Bisaddukt (1:2-Addukt) und Restmonomer im Verhältnis von etwa 1 : 1 : 1. Durch Einsatz einer Diisocyanatüberschusses läßt sich der Bisadduktgehalt der Mischung zurückdrängen. Dafür steigt der Anteil an Restmonomer. Bei Einsatz eines Überschusses an Hydroxy(meth)acrylat stellt sich der inverse Effekt ein. Die Bisaddukte erfüllen als Diacrylate im Gegensatz zum entsprechenden Monoaddukt nicht mehr das erwünschte Kriterium der Heterofunktionalität. Sie mindern die Qualität des Monoadduktes und bleiben auch nicht ohne Auswirkung auf die Qualität und das Eigenschaftsbild der angestrebten Endprodukte. Die gleichen Überlegungen treffen auch für das im Addukt verbleibende, überschüssige Ausgangsdiisocyanat zu. Darüber hinaus sind Diisocyanate sehr reaktionsfähige Verbindungen. Vertreter dieser Substanzklasse sind aus diesem Grunde als toxisch einzustufen. Ein hoher Restgehalt an monomerem Diisocyanat im Produkt sollte daher grundsätzlich vermieden werden.

Es wäre vorteilhaft und wünschenswert, wenn das durch Umsetzung von Hydroxy(meth)acrylaten und Diisocyanaten erhaltene heterofunktionalisierte Monoaddukt nicht die angeführten Nachteile aufweisen würde.

Die EP 0 623 591 beschreibt die Herstellung olefinisch ungesättigter Isocyanate, die durch Umsetzung von Diisocyanaten mit olefinisch ungesättigten Alkoholen (NCO/OH-Verhältnis von 4:1 bis 40: 1) und anschließender Entfernung des überschüssigen Ausgangsisocyanats durch Kurzwegverdampfung erhalten werden. Die erhaltenen Produkte sind monomerarme, heterofunktionelle Monoaddukte, die je nach Dimension des Isocyanatüberschusses einen mehr oder weniger reduzierten Gehalt an Bisaddukt aufweisen. Die Produkte der EP 0 623 591 ähneln den erfindungsgemäßen Produkten, sind mit ihnen aber nicht identisch. Der Unterschied besteht in der Natur der Doppelbindungen der Addukte. Die Produkte der EP 0 623 591 weisen olefinisch ungesättigte Doppelbindungen auf, die erfindungsgemäßen Addukte tragen acrylische Doppelbindungen.

Der Versuch, die Herstellbedingungen der EP 0 623 591 auf die erfindungsgemäßen Produkte zu übertragen, scheiterte. Spätestens im Zuge der Kurzwegverdampfung kam es grundsätzlich zur Vergelung der Produktmischung. Auch durch Einsatz von Stabilisatoren wie Hydrochinon, Triphenylphosphit und 2,2,6,6-Tetramethyl-1-oxylpiperidin konnte die Vergelung der Produktmischung nicht unterbunden werden.

Überraschend ließ sich eine vorzeitige Vergelung der Produktmischung vermeiden, wenn die Umsetzung der Edukte und die Kurzwegverdampfung unter optimierten Bedingungen in Anwesenheit einer Kombination geeigneter Inhibitoren und inhibitiv wirkender Gase durchgeführt wurden.

Gegenstand der vorliegenden Erfindung sind daher monomerarme 1 : 1 Monoaddukte aus Diisocyanaten und Hydroxy(meth)acrylaten mit einem Gehalt an freiem Diisocyanat von unter 0,7 Gew.-% und einen Gehalt an freiem NCO von 10,4 - 16,4 Gew.-%, erhalten durch Umsetzung von 5 - 20 mol Diisocyanat mit 1 mol Hydroxy(meth)acrylat in einem Temperaturbereich von 40 - 120 °C in Gegenwart von Inhibitoren, wobei die Reaktion bis zum vollständigen Umsatz der Acrylatkomponente durchgeführt wird und anschließend das nicht umgesetzte Diisocyanat durch eine Kurzwegdestillation bei 80 - 220 °C/0,1 - 10 mbar vom Reaktionsprodukt abgetrennt wird, wobei Luft, Stickstoffmonoxid, Sauerstoff oder eine Mischung, die neben Luft, Sauerstoff oder Stickstoffmonoxid einen Anteil von 1 - 90 Vol-% an Kohlendioxid, Stickstoff oder Edelgasen oder Mischungen dieser Gase enthält, als Inhibitorgas durch die Apparatur geleitet wird.

Als Isocyanate eignen sich aliphatische, cycloaliphatische und araliphatische, d. h. arylsubstituierte aliphatische Diisocyanate, wie sie beispielsweise im Houben-Weyl, Methoden der organischen Chemie, Band 14/2, Seite 61 - 70 und im Artikel von W. Siefken, Justus Liebigs Annalen der Chemie **562**, 75 - 136, beschrieben werden, wie 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), 1,9-Diisocyanato-5-methylnonan, 1,8-Diisocyanato-2,4-dimethyloctan, 1,12-dodecandiisocyanat, ω,ω'-Diisocyanatodipropylether, Cyclobuten-1,3-diisocyanat, Cyclohexan-1,3- und 1,4-diisocyanat, 3-Isocyanatomethyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalin-2 (oder -3), 5-ylendimethylendiisocyanat, Hexahydro-4,7-methano-indan-1 (oder 2) 5 (oder 6) ylendimethylendiisocyanat, Hexahydro-4,7-methanoindan-1 (oder 2) 5 (oder 6) ylendiisocyanat, 2,4- und 2,6-Hexahydrotoluylendüsocyanat, Perhydro-2,4'diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzoyl, 1,4-Diisocyanatomethyl-2,3,5,6-tetramethylbenzol, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan sowie beliebige Gemische dieser Verbindungen. Weitere geeignete Isocyanate werden in dem genannten Artikel in den Annalen auf Seite 122 f. beschrieben. Auch 2,5(2,6)-Bis(isocyanatomethyl)bicyclo[2.2.1]heptan (NBDI) ist in Reinsubstanz oder als Mischkomponente geeignet. Besonders bevorzugt werden in der Regel die technisch leicht zugänglichen aliphatischen und cycloaliphatischen Diisocyanate sowie deren Isomerengemische eingesetzt.

Geeignete Hydroxy(meth)acrylate sind Verbindungen gemäß Formel I, wobei R¹ 2-25 C-Atome enthält und ein verzweigter oder unverzweigter aliphatischer, ein alkyloder cycloalkylsubstituierter oder auch unsubstituierter cycloaliphatischer, ein araliphatischer oder auch aromatischer Rest sein kann, und R² für Wasserstoff oder eine Methylgruppe steht.

Bevorzugt werden technisch leicht zugängliche Hydroxy(meth)acrylate wie Hydroxybutylacrylat, Hydroxybutylmethacrylat, Hydroxyethylacrylat (HEA) und Hydroxyethylmethacrylat (HEMA) eingesetzt.

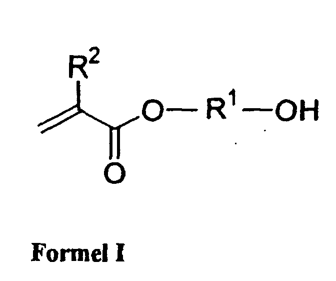

Zur Stabilisierung der Reaktionsmischung aus Diisocyanat und Hydroxyacrylat sowie der erfindungsgemäßen monomerarmen Monoaddukte werden Inhibitoren eingesetzt. Unter Inhibitoren werden in diesem Zusammenhang solche Substanzen verstanden, die Kettenreaktionen wie die Autooxidation oder Polymerisationen hemmen oder unterbinden. Dazu gehören zum Beispiel phenolische Antioxidantien, aromatische Amine, Thioether und Phosphorigsäureester.

Als Antioxidantien eignen sich beispielsweise Brenzcatechin, 4-Methoxyphenol, 4-tert.-Butyloxyphenol, 4-Benzyloxyphenol, α-Naphthol, β-Naphthol, Phenothiazin, 10-10-Dimethyl-9,10-dihydroacridin, Bis-[2-hydroxy-5-methyl-3-cyclohexylphenyl]-methan, Bis-[2-hydroxy-5-methyl-3-tert.-butylphenyl]-methan, Hydrochinon, Pyrogallol, 3,4-Dihydroxy-1-tert.-butylbenzol, 4-Methoxy-2(bzw. 3)-tert.butylphenol (BHA), BHA auch in Kombination mit Bis-[2-carboxyethyl]-sulfid (TDPA), 4-Methyl-2,6-di-tert.-butylphenol (BHT), Bis-[4-hydroxy-2-methyl-5-tert.butylphenyll-sulfid, 4-Butylmercaptomethyl-2,6-di-tert.-butylphenol, 4-Hydroxy-3,5-di-tert.-butylphenylmethansulfonsäure-dioctadecylester, 2,5-Dihydroxy-1-tert.butylbenzol, 2,5-Dihydroxy-1,4-di-tert.-butylbenzol, 3,4-Dihydroxy-1-tert.butylbenzol und 2,3-Dimethyl-1,4-bis-[3,4-dihydroxyphenyl]-butan sowie Mischungen dieser Inhibitoren.

Die phenolischen Antioxidantien können auch mit Phosphorigsäureestern gemäß Formel II kombiniert werden, wobei X Sauerstoff oder Schwefel ist, und wobei R¹, R² und R³ gleiche oder verschiedene Alkyl-, Alkylen-(1)-yl-, Aryl- oder Aralkylreste mit jeweils 1 - 20 C-Atomen repräsentieren.

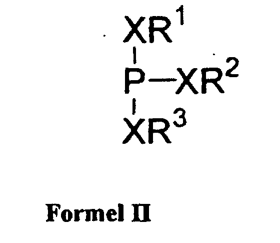

Die phenolischen Antioxidantien können auch mit Thioethern oder Aminen, wie beispielsweise 2-Anilinonaphthalin (PBN), 1-Anilinonaphthalin (PAN) oder 1,4-Dianilinobenzol kombiniert werden. Natürlich können auch marktübliche Substanzen eingesetzt werden, die aufgrund ihres chemischen Aufbaus mehrere polymerisationsinhibierende Prinzipien in sich vereinigen, wie z.B. 2,2'-Thiobis-(4-tertoctylphenol). Bevorzugt kommen Phenothiazin, 2,6-Di-tert.-butyl-4-(4,6-bis(octylthio)-1,3,5-triazin-2-ylaminophenol und 4-Methyl-2,6-di-tert.-butyl-phenol und 4,4'-Methylen-bis-2,6-di-tert.-butylphenol zum Einsatz.

Der Gehalt der erfindungsgemäß hergestellten Verbindungen an freiem NCO beträgt 10,4 bis 16,4 Gew.-%. Der Restanteil an monomerem Diisocyanat liegt unter 0,7 Gew.-%. Die Viskosität der erfindungsgemäß hergestellten Verbindungen bei Raumtemperatur variiert in einem weiten Bereich von 80 bis 35 000 mPas.

Das Molverhältnis von Diisocyanat und Hydroxy(meth)acrylat hängt davon ab, welcher Gehalt an Bisaddukt zugelassen werden darf. Je höher der Überschuß an Diisocyanat, desto niedriger ist der Gehalt an urethanisierter Diacrylverbindung. Die Umsetzung der beiden Komponenten erfolgt bei 20 - 160 °C. Zur Beschleunigung der NCO/OH-Reaktion können Katalysatoren wie z.B. Dibutyllaurat eingesetzt werden. Katalysatoren führen jedoch zu einer gesteigerten Feuchtigkeitsempfindlichkeit der Produktmischung sowie des monomerbefreiten Endprodukts.

Die Entfernung überschüssigen Diisocyanates erfolgt destillativ, vorzugsweise unter Verwendung von Dünnschichtverdampfern oder Fallfilmverdampfern. Die Kurzwegdestillation wird bei 80 - 220 °C/0,1 - 10 mbar in Gegenwart eines Inhibitorgases durchgeführt. Die Temperatur und der Unterdruck richten sich nach dem Viskositätsverhalten der jeweiligen Produkte und sind zudem eine Funktion des optimalen Gaszustroms. Bei dem Kurzwegverdampfer kann es sich um eine Glasoder auch Metallapparatur handeln. Als Inhibitorgas wird Sauerstoff oder eine Mischung von Sauerstoff in beliebigen Inertgasen oder Inertgasmischungen eingesetzt. Anstelle von Sauerstoff kann auch Stickstoffmonoxid zum Einsatz gelangen. In Abhängigkeit von der Dimensionierung der einzelnen Bestandteile der Kurzwegverdampferapparatur kann es vorteilhaft sein, die Produktvorlage vor Beginn der Kurzwegverdampfung mit 0,001 - 0,5 Gew.-% 4-Methyl-2,6-di-tertbutyl-phenol zu beschicken.

Gegenstand der vorliegenden Erfindung ist auch ein Verfahren zur Herstellung von monomerarmen 1 : 1 Monoaddukten aus Diisocyanaten und Hydroxy(meth)-acrylaten mit einem Gehalt an freiem Diisocyanat von unter 0,7 Gew.-% und einen Gehalt an freiem NCO von 10,4 - 16,4 Gew.-%, durch Umsetzung von 5 - 20 mol Diisocyanat mit 1 mol Hydroxy(meth)acrylat in einem Temperaturbereich von 40 - 120 °C in Gegenwart von Inhibitoren, wobei die Reaktion bis zum vollständigen Umsatz der Acrylatkomponente durchgeführt wird und anschließend das nicht umgesetzte Diisocyanat durch eine Kurzwegdestillation bei 80 - 220 °C/0,1 - 10 mbar vom Reaktionsprodukt abgetrennt wird, wobei Luft, Stickstoffmonoxid, Sauerstoff oder eine Mischung, die neben Luft, Sauerstoff oder Stickstoffmonoxid einen Anteil von 1-90 Vol-% an Kohlendioxid, Stickstoff oder Edelgasen oder Mischungen dieser Gase enthält, als Inhibitorgas durch die Apparatur geleitet wird.

Die erfindungsgemäßen monomerarmen Monoaddukte können als Ausgangsstoffe zur Herstellung von acryl- oder NCO-funktionalisierten Vernetzern und Bindemittel für Lacke und Klebstoffe verwendet werden. Sie können als bi- und heterofunktionelle Verbindungen zur Herstellung von maßgeschneiderten, funktionalisierten Polymeren eingesetzt werden und können auch als Linker für die Festphasensynthese, z.B. von Oligo- und Polynucleotiden oder Oligo- und Polypeptiden, Verwendung finden.

Die Erfindung wird durch die folgenden Beispiele näher erläutert.

### Beispiele 1 bis 8

### Allgemeine Herstellungsvorschrift

Eine intensiv gerührte Mischung aus 5 bis 20 Molen Diisocyanat, 1000 ppm Phenothiazin, 1000 ppm 2,6-Di-tert.-butyl-4-(4,6-bis(octylthio)-1,3,5-triazin-2-ylaminophenol und 1000 ppm 4,4'-Methylen-bis-2,6-di-tert.-butylphenol wird bei 75 - 85 °C tropfenweise mit 1 Mol Hydroxy(meth)acrylat versetzt. Nach Beendigung der Zugabe wird bei 90 - 95 °C so lange weitergerührt, bis ein vollständiger Umsatz der Alkoholkomponente erfolgt ist. Im Anschluß wird der Ansatz mit trockener Luft gesättigt und das nicht umgesetzte Diisocyanat mittels Kurzwegdestillation bei 80-220 °C und 0,1 - 10 mbar abgetrennt, wobei ein steter Zustrom an Inhibitorgas durch die Apparatur geleitet wird.

Die vom Rückstand (Reaktionsprodukt) ermittelten chemischen und physikalischen Kenndaten können Tabelle 1 entnommen werden.

**Tabelle 1:**

| Beispiel | Diisocyanat | Hydroxyacrylat | NCO_{gef.} [%] | Viskosität [mPas] | Monomergehalt [%] |
|---|---|---|---|---|---|
| 1 | IPDI | HEA | 12,0 | 13 300 | 0,4 |
| 2* | HDI | HEA | 14,2 | 80 | 0,1 |
| 3* | MPDI | HEA | 14,3 | 180 | 0,5 |
| 4 | TMDI | HEA | 12,0 | 370 | 0,4 |
| 5 | IPDI | HEMA | 11,7 | 14 100 | 0,5 |
| 6 | HDI | HEMA | 13,6 | 105 | 0,2 |
| 7 | MPDI | HEMA | 13,8 | 220 | 0,4 |
| 8 | TMDI | HEMA | 11,7 | 460 | 0,5 |

| | | | | | |
|---|---|---|---|---|---|
| *Produkt neigt zur Kristallisation | | | | | |

## Patentansprüche

1. Monomerarme 1 : 1 Monoaddukte aus Diisocyanaten und Hydroxy(meth)-acrylaten mit einem Gehalt an freiem Diisocyanat von unter 0,7 Gew.-% und einen Gehalt an freiem NCO von 10,4 - 16,4 Gew.-%, erhalten durch Umsetzung von 5 - 20 mol Diisocyanat mit 1 mol Hydroxy(meth)acrylat in einem Temperaturbereich von 40 - 120 °C in Gegenwart von Inhibitoren, wobei die Reaktion bis zum vollständigen Umsatz der Acrylatkomponente durchgeführt wird und anschließend das nicht umgesetzte Diisocyanat durch eine Kurzwegdestillation bei 80 - 220 °C/0,1 - 10 mbar vom Reaktionsprodukt abgetrennt wird, wobei Luft, Stickstoffmonoxid, Sauerstoff oder eine Mischung, die neben Luft, Sauerstoff oder Stickstoffinonoxid einen Anteil von 1-90 Vol-% an Kohlendioxid, Stickstoff oder Edelgasen oder Mischungen dieser Gase enthält, als Inhibitorgas durch die Apparatur geleitet wird.

2. Monoaddukte nach Anspruch 1,
**dadurch gekennzeichnet,**
**daß** als Hydroxy(meth)acrylat eine Verbindung der folgenden Formel eingesetzt wird: 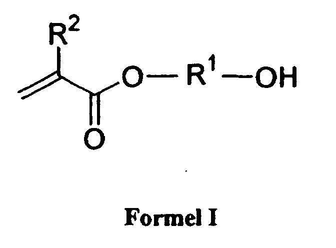 wobei R¹ ein verzweigter oder unverzweigter aliphatischer, ein unsubstituierter oder alkyl- und/oder cycloalkylsubstituierter cycloaliphatischer, araliphatischer oder aromatischer Rest mit 2 - 25 C-Atome und R² Wasserstoff oder eine Methylgruppe bedeuten.

3. Monoaddukte nach Anspruch 2,
**dadurch gekennzeichnet,**
**daß** als Hydroxy(meth)acrylat Hydroxybutylacrylat, Hydroxybutylmethacrylat, Hydroxyethylacrylat (HEA) und Hydroxyethylmethacrylat (HEMA) allein oder in Mischungen eingesetzt werden.

4. Monoaddukte nach mindestens einem der Ansprüche 1 bis 3,
**dadurch gekennzeichnet,**
**daß** aliphatische und/oder cycloaliphatische Diisocyanate sowie deren Isomerengemische eingesetzt werden.

5. Monoaddukte nach Anspruch 4,
**dadurch gekennzeichnet,**
**daß** Isophorondiisocyanat (IPDI), Hexamethylendiisocyanat (HDI), Methylpentandiisocyanat (MPDI), 2,5(2,6)-Bis(isocyanatomethyl)bicyclo[2.2.1]heptan (NBDI), Dicyclohexylmethan-4,4'-diisocyanat, Dicyclohexyl-2,4'-diisocyanat, 1,3-Diisocyanatomethylcyclohexan, 1,4-Diisocyanatomethylcyclohexan und Trimethylhexamethylendiisocyanat (TMDI) eingesetzt werden.

6. Monoaddukte nach Anspruch 4,
**dadurch gekennzeichnet,**
**daß** Isophorondiisocyanat und Trimethylhexamethylendiisocyanat eingesetzt werden.

7. Monoaddukte nach einem der Ansprüche 1 bis 6,
**dadurch gekennzeichnet,**
**daß** phenolische Antioxidantien als Inhibitoren eingesetzt werden.

8. Monoaddukte nach Anspruch 7,
**dadurch gekennzeichnet,**
**daß** Brenzcatechin, 4-Methoxyphenol, 4-tert.-Butyloxyphenol, 4-Benzyloxyphenol, α-Naphthol, β-Naphthol, Phenothiazin, 10-10-Dimethyl-9,10-dihydroacridin, Bis-[2-hydroxy-5-methyl-3-cyclohexylphenyl]-methan, Bis-[2-hydroxy-5-methyl-3-tert.-butylphenyl]-methan, Hydrochinon, Pyrogallol, 3,4-Dihydroxy-1-tert.-butylbenzol, 4-Methoxy-2(bzw. 3)-tert.-butylphenol (BHA), BHA auch in Kombination mit Bis-[2-carboxyethyl]-sulfid (TDPA), 4-Methyl-2,6-di-tert.-butylphenol (BHT), Bis-[4-hydroxy-2-methyl-5-tert.butylphenyl]-sulfid, 4-Butylmercaptomethyl-2,6-di-tert.-butylphenol, 4-Hydroxy-3,5-di-tert.-butylphenylmethansulfonsäure-dioctadecylester, 2,5-Dihydroxy-1-tert.-butylbenzol, 2,5-Dihydroxy-1,4-di-tert.-butylbenzol, 3,4-Dihydroxy-1-tert.-butylbenzol und 2,3-Dimethyl-1,4-bis-[3,4-dihydroxyphenyl]-butan sowie Mischungen eingesetzt werden.

9. Monoaddukte nach Anspruch 7 oder 8,
**dadurch gekennzeichnet,**
**daß** die phenolischen Antioxidantien mit Phosphorigsäureestern gemäß Formel II kombiniert werden, 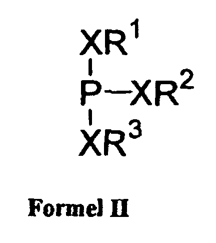 wobei X Sauerstoff oder Schwefel ist, und wobei R¹, R² und R³ gleiche oder verschiedene Alkyl-, Alkylen-(1)-yl-, Aryl- oder Aralkylreste mit jeweils 1 - 20 C-Atomen repräsentieren.

10. Monoaddukte nach Anspruch 7 oder 8,
**dadurch gekennzeichnet,**
**daß** die phenolischen Antioxidantien mit Thioethern oder Aminen ausgewählt aus 2-Anilinonaphthalin (PBN), 1-Anilinonaphthalin (PAN) oder 1,4-Dianilinobenzol kombiniert eingesetzt werden.

11. Monoaddukte nach mindestens einem der Ansprüche 7 bis 10,
**dadurch gekennzeichnet,**
**daß** Phenothiazin, 2,6-Di-tert.-butyl-4-(4,6-bis(octylthio)-1,3,5-triazin-2-ylaminophenol und 4-Methyl-2,6-di-tert.-butyl-phenol und/oder 4,4'-Methylenbis-2,6-di-tert.-butylphenol eingesetzt werden.

12. Verfahren zur Herstellung von monomerarmen 1 : 1 Monoaddukten aus Diisocyanaten und Hydroxy(meth)acrylaten mit einem Gehalt an freiem Diisocyanat von unter 0,7 Gew.-% und einen Gehalt an freiem NCO von 10,4-16,4 Gew.-%, durch Umsetzung von 5 - 20 mol Diisocyanat mit 1 mol Hydroxy(meth)acrylat in einem Temperaturbereich von 40 - 120 °C in Gegenwart von Inhibitoren, wobei die Reaktion bis zum vollständigen Umsatz der Acrylatkomponente durchgeführt wird und anschließend das nicht umgesetzte Diisocyanat durch eine Kurzwegdestillation bei 80 - 220 °C/0,1 - 10 mbar vom Reaktionsprodukt abgetrennt wird, wobei Luft, Stickstoffmonoxid, Sauerstoff oder eine Mischung, die neben Luft, Sauerstoff oder Stickstoffmonoxid einen Anteil von 1-90 Vol-% an Kohlendioxid, Stickstoff oder Edelgasen oder Mischungen dieser Gase enthält, als Inhibitorgas durch die Apparatur geleitet wird.

13. Verwendung der Monoaddukte gemäß Anspruch 1 bis 11 als Ausgangsstoff für acryl- oder NCO-funktionalisierte Vernetzer und Bindemittel für Lacke und Klebstoffe.

14. Verwendung der Monoaddukte gemäß Anspruch 1 bis 11 als Linker für die Festphasensynthese von Oligo- und Polynucleotiden und -peptiden.

## Claims

1. A low-monomer-content 1: 1 monoadduct of a diisocyanate and a hydroxy (meth)acrylate, having a free diisocyanate content of less than 0.7% by weight and a free NCO content of from 10.4% to 16.4% by weight, obtained by reacting from 5 to 20 mol of diisocyanate with 1 mol of hydroxy (meth)acrylate in a temperature range from 40 to 120°C in the presence of inhibitors, the reaction being carried out to full conversion of the acrylate component and the unreacted diisocyanate being separated off from the reaction product subsequently by means of a short-path distillation at from 80 to 220°C/from 0.1 to 10 mbar, there being passed through the apparatus as inhibitor gas air, nitrogen monoxide, oxygen or a mixture which as well as air, oxygen or nitrogen monoxide includes a fraction of from 1% to 90% by volume of carbon dioxide, nitrogen or noble gases or mixtures of these gases.

2. A monoadduct according to claim 1, **characterized in that** a compound of the following formula is used as hydroxy (meth)acrylate): 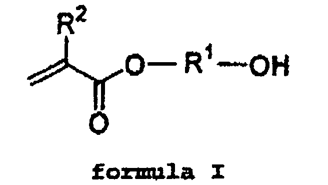 where R¹ is a branched or unbranched aliphatic, an unsubstituted or alkyl- and/or cycloalkyl-substituted cycloaliphatic, araliphatic or aromatic radical having from 2 to 25 carbon atoms and R² is hydrogen or a methyl group.

3. A monoadduct according to claim 2, **characterized in that** hydroxybutyl acrylate, hydroxybutyl methacrylate, hydroxyethyl acrylate (HEA) and hydroxyethyl methacrylate (HEMA), alone or in mixtures, are used as hydroxy (meth)acrylate.

4. A monoadduct according to at least one of claims 1 to 3, **characterized in that** an aliphatic or cycloaliphatic diisocyanate or else an isomer . mixture thereof is used.

5. A monoadduct according to claim 4, **characterized in that** isophorone diisocyanate (IPDI), hexamethylene diisocyanate (HDI), methylpentane diisocyanate (MPDI), 2,5(2,6)-bis(isocyanatomethyl)bicyclo[2.2.1]heptane (NBDI), dicyclohexylmethane 4,4'-diisocyanate, dicyclohexyl 2,4'-diisocyanate, 1,3-diisocyanatomethylcyclohexane, 1,4-diisocyanatomethylcyclohexane and trimethylhexamethylene diisocyanate (TMDI) are used.

6. A monoadduct according to claim 4, **characterized in that** isophorone diisocyanate and trimethylhexamethylene diisocyanate are used.

7. A monoadduct according to any one of claims 1 to 6, **characterized in that** a phenolic antioxidant is used as inhibitor.

8. A monoadduct according to claim 7, **characterized in that** pyrocatechol, 4-methoxyphenol, 4-tert-butyloxyphenol, 4-benzyloxyphenol, α-naphthol, β-naphthol, phenothiazine, 10,10-dimethyl-9,10-di-hydroacridine, bis[2-hydroxy-5-methyl-3-cyclohexylphenyl]methane, bis[2-hydroxy-5-methyl-3-tert-butylphenyl]methane, hydroquinone, pyrogallol, 3,4-dihydroxy-1-tert-butylbenzene, 4-methoxy-2(or 3)-tert-butylphenol (BHA), BHA in combination with bis[2-carboxyethyl] sulphide (TDPA), 4-methyl-2,6-di-tert-butylphenol (BHT), bis(4-hydroxy-2-methyl-5-tert-butylphenyl] sulphide, 4-butylmercaptomethyl-2,6-di-tert-butylphenol, dioctadecyl 4-hydroxy-3,5-di-tert-butylphenylmethanesulphonate, 2,5-dihydroxy-1-tert-butylbenzene, 2,5-dihydroxy-1,4-di-tert-butylbenzene, 3,4-dihydroxy-1-tert-butylbenzene and 2,3-dimethyl-1,4-bis[3,4-dihydroxyphenyl]butane and also mixtures are used.

9. A monoadduct according to claim 7 or 8, **characterized in that** the phenolic antioxidant is combined with a phosphorous ester according to formula II 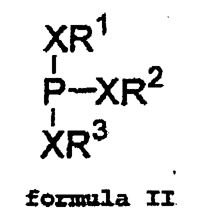 where X is oxygen or sulphur and where R¹, R² and R³ are identical or different alkyl, alkylen-(1)-yl, aryl or aralkyl radicals having in each case from 1 to 20 carbon atoms.

10. A monoadduct according to claim 7 or 8, **characterized in that** the phenolic antioxidant is used in combination with a thioether or amine selected from 2-anilinonaphthalene (PEN), 1-anilinonaphthalene (PAN) and 1,4-dianilinobenzene.

11. A monoadduct according to at least one of claims 7 to 10, **characterized in that** phenothiazine, 2,6-di-tert-butyl-4-(4,6-bis(octylthio)-1,3,5-triazin-2-ylamino)phenol and 4-methyl-2,6-di-tert-butylphenol and/or 4,4'-methylenebis-2,6-di-tert-butylphenol are used.

12. A process for preparing a low-monomer-content 1:1 monoadduct of a diisocyanate and a hydroxy (meth)acrylate, having a free diisocyanate content of less than 0.7% by weight and a free NCO content of from 10.4% to 16.4% by weight, by reacting from 5 to 20 mol of diisocyanate with 1 mol of hydroxy (meth)acrylate in a temperature range from 40 to 120°C in the presence of inhibitors, the reaction being carried out to full conversion of the acrylate component and the unreacted diisocyanate being separated off from the reaction product subsequently by means of a short-path distillation at from 80 to 220°C/from 0.1 to 10 mbar, there being passed through the apparatus as inhibitor gas air, nitrogen monoxide, oxygen or a mixture which as well as air, oxygen or nitrogen monoxide includes a fraction of from 1% to 90% by volume of carbon dioxide, nitrogen or noble gases or mixtures of these gases.

13. The use of a monoadduct according to any of claims 1 to 11 as starting material for an acrylic-functionalized or NCO-functionalized crosslinker or binder for a coating material or adhesive.

14. The use of a monoadduct according to any of claims 1 to 11 as a linker for the solid-phase synthesis of an oligo- or polynucleotide or -peptide.

## Revendications

1. Mono-produits d'addition 1/1 à faible teneur en monomères constitués de diisocyanates et d'hydroxy(méth)acrylates possédant une teneur en diisocyanate libre inférieure à 0,7 % en poids et une teneur en NCO libre de 10,4 à 16,4 % en poids, obtenus par réaction de 5 - 20 moles de diisocyanate avec une mole d'hydroxy(méth)acrylate dans une plage de température de 40 à 120 °C en présence d'inhibiteurs, la réaction étant poursuivie jusqu'à transformation complète du constituant acrylate et ensuite le diisocyanate n'ayant pas réagi étant séparé par une distillation courte à 80 - 220 °C / 0,1 - 10 mbar, du produit de réaction, et en faisant circuler comme gaz inhibiteur à travers l'appareil de l'air, du monoxyde d'azote de l'oxygène ou un mélange qui en plus de l'air, de l'oxygène ou du monoxyde d'azote, contient une fraction de 1 - 90 % en volume de dioxyde de carbone, d'azote ou de gaz rares, ou de mélanges de ces gaz,

2. Mono-produits d'addition selon la revendication 1,
**caractérisés en ce que**
comme hydroxy(méth)acrylate on utilise un composé répondant à la formule suivante : 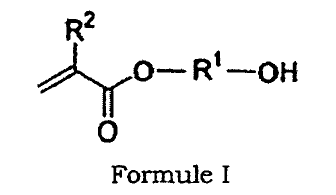 dans laquelle R¹ représente un reste aliphatique ramifié ou non ramifié, un reste cycloaliphatique, araliphatique ou aromatique, alkyl- et/ou cycloalkylsubstitué comportant 2 à 25 atomes de carbone, et R² représente de l'hydrogène ou un groupe méthyle.

3. Mono-produits d'addition selon la revendication 2,
**caractérisés en ce que**
comme hydroxy(méth)acrylate, on utilise l'acrylate d'hydroxybutyle, le méthacrylate d'hydroxy butyle, l'acrylate d'hydroxyéthyle (HEA) et le méthacrylate d'hydroxyéthyle (HEMA), seuls ou en mélanges.

4. Mono-produits d'addition selon au moins l'une des revendications 1 à 3,
**caractérisés en ce qu'**
on utilise des diisocyanates aliphatiques et/ou cycloaliphatiques ainsi que des mélanges de leurs isomères.

5. Mono-produits d'addition selon la revendication 4,
**caractérisés en ce qu'**
on utilise le diisocyanate d'isophorone (IPDI), le diisocyanate d'hexaméthylène (HDI), le diisocyanate de méthylpentane (MPDI), le 2,5(2,6)-bis(isocyanatométhyl)bicyclo(2,2,1)heptane (NBDI), le 4,4'-diisocyanate de dicyclohexylméthane, le 2,4'-diisocyanate de dicyclohexyle, le 1,3-diisocyanatométhylcyclohexane, le 1,4-diisocyanatométhylcyclohexane et le diisocyanate de triméthylhexaméthylène (TMDI).

6. Mono-produits d'addition selon la revendication 4,
**caractérisés en ce qu'**
on utilise le diisocyanate d'isophorone et le diisocyanate de triméthylhexaméthylène.

7. Mono-produits d'addition selon l'une quelconque des revendications 1 à 6,
**caractérisés en ce qu'**
comme inhibiteurs on utilise des antioxydants phénoliques.

8. Mono-produits d'addition selon la revendication 7,
**caractérisés en ce qu'**
on utilise la pyrocatéchine, le 4-méthoxyphénol, le 4-tert-butyloxyphénol, le 4-benzyloxyphénol, l'α-naphthol, le β-naphthol, la phénothiazine, la 10-10-diméthyl-9,10-dihydroacridine, le bis-(2-hydroxy-5-méthyl-3-cyclohexylphényl)-méthane, le bis(2-hydroxy-5-méthyl-3-tert-butylphényl)méthane, l'hydroquinone, le pyrogallol, le 3,4-dihydroxy-1-tert-butylbenzène, le 4-méthoxy-2(et 3)-tert-butylphénol (BHA), le BHA également en combinaison avec le sulfure de bis-(2-carboxyéthyle) (TPDA), le 4-méthyl-2,6-di-tert-butylphénol (BHT), le sulfure de bis-(4-hydroxy-2-méthyl-5-tert-butylphényle), le 4-butylmercaptométhyl-2,6-di-tert-butylphénol, l'ester dioctadécylique de l'acide 4-hydroxy-3,5-di-tert-butylphénylméthane sulfonique, le 2,5-dihydroxy-1-tert-butylbenzène, le 2,5-dihydroxy-1,4-di-tert-butylbenzène, le 3,4-dihydroxy-1-tert-butylbenzène, et le 2,3-diméthyl-1,4-bis-(3,4-dihydroxyphényl)butane ainsi que leurs mélanges

9. Mono-produits d'addition selon la revendication 7 ou 8,
**caractérisés en ce que**
les antioxydants phénoliques sont combinés avec des esters de l'acide phosphorique selon la formule II : 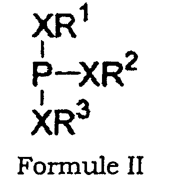 dans laquelle X représente un atome d'oxygène ou de soufre, et R¹, R² et R³ représentent des restes alkyle, alkylène (I) yle, aryle ou aralkyle identiques ou différents, comportant à chaque fois 1 à 20 atomes de carbone.

10. Mono-produits d'addition selon la revendication 7 ou 8,
**caractérisés en ce que**
les antioxydants phénoliques sont utilisés combinés avec des thioéthers ou des amines choisies parmi le 2-anilinonaphthalène (PBN), le 1-anilinonaphthalène (PAN) ou le 1,4-dianilinobenzène.

11. Mono-produits d'addition selon au moins l'une des revendications 7 à 10,
**caractérisés en ce qu'**
on utilise la phénothiazine, le 2,6-di-tert-butyl-4-(4,6-bis(octylthio)-1,3,5-triazin-2-ylaminophénol et le 4-méthyl-2,6-di-tert-butyl-phénol et/ou le 4,4'-méthylèn-bis-2,6-di-tert-butylphénol.

12. Procédé pour la préparation de mono-produits d'addition 1/1 à faible teneur en monomères, constitués de diisocyanates et d'hydroxy(méth)acrylates présentent une teneur en diisocyanate libre inférieure à 0,7 % en poids et une teneur en NCO libre de 10,4 à 16,4 % en poids, obtenus par réaction de 5 - 20 moles de diisocyanate avec une mole d'hydroxy(méth)acrylate dans une plage de température de 40 à 120 °C en présence d'inhibiteurs, selon laquelle
la réaction est poursuivie jusqu'à transformation complète du constituant acrylate, et ensuite le diisocyanate non entré en réaction est séparé par une distillation courte à 80 - 220 °C / 0,1 - 10 mbar, du produit de réaction, et comme gaz inhibiteur à travers l'appareil on fait circuler de l'air, du monoxyde d'azote, de l'oxygène, ou un mélange qui contient, en plus de l'air, de l'oxygène ou du monoxyde d'azote, une fraction de 1 - 90 % en volume de dioxyde de carbone, d'azote ou de gaz rares, ou de mélanges de ces gaz,

13. Utilisation des mono-produits d'addition selon les revendications 1 à 11, comme matière de départ pour les agents de réticulation et les liants à fonctionnalité acrylique ou NCO pour peintures et adhésifs.

14. Utilisation des mono-produits d'addition selon les revendications 1 à 11, comme éléments d'assemblage pour la synthèse en phase solide d'oligo et polynucléotides et peptides.
